# EUROPEAN PATENT APPLICATION

(11) **EP 4 576 669 A1**
(43) Date of publication of application: **25.06.2025**
(21) Application number: 24196659.7
(22) Date of filing: 27.08.2024
(51) Int. Cl.: H04L 9/40, H04L 41/0806, H04W 4/50

(54) **RADIO ACCESS NETWORK PROVISIONING**

(30) Priority: 21.12.2023 US 202318393492
(71) Applicant: FUJITSU LIMITED, Kawasaki-shi, Kanagawa 211-8588 (JP)
(72) Inventor: BEESLEY, William, Richardson, 75082 (US); PLOTKIN, Brian S., Richardson, 75082 (US); PETTIJOHN, Ryan, Richardson, 75082 (US)
(74) Representative: Haseltine Lake Kempner LLP

(57) **Abstract**

A method may include a radio access network device accessing a first network address stored on the radio access network device in response to the radio access network device powering on. The method may include directing an identifier of the radio access network device to the first network address. The method may also include the radio access network device obtaining configuration data for provisioning the radio access network device in response to the identifier having been directed to the first network address. The method may additionally include provisioning the radio access network device according to the configuration data to establish a radio access network implemented by the radio access network device.

## Description

### FIELD

The present disclosure generally relates to provisioning radio access networks (RANs).

### BACKGROUND

A radio access network (RAN) may be employed to help to provide secure, reliable, high-performance wireless communication. For example, a RAN may facilitate the transmission of data between user equipment devices and a core network. A RAN may be deployed in multiple different situations to help provide wireless communication. For example, a RAN may be deployed in a city to assist in coverage for a wireless communications carrier. Alternately or additionally, a RAN may be deployed in a factory to provide a wireless network for equipment or in an apartment building to provide a wireless network for residents.

The subject matter claimed herein is not limited to embodiments that solve any disadvantages or that operate only in environments such as those described above. Rather, this background is only provided to illustrate one exemplary technology area where some embodiments described herein may be practiced.

### SUMMARY

According to an aspect of an embodiment, a method may include a radio access network device accessing a first network address stored on the radio access network device in response to the radio access network device powering on. The method may include directing an identifier of the radio access network device to the first network address. The method may also include the radio access network device obtaining configuration data for provisioning the radio access network device in response to the identifier having been directed to the first network address. The method may additionally include provisioning the radio access network device according to the configuration data to establish a radio access network implemented by the radio access network device.

It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the accompanying drawings in which:
FIG. 1 illustrates an example operating environment for provisioning a radio access network according to one or more embodiments of the present disclosure;
FIG. 2 illustrates an example environment for a radio access network according to one or more embodiments of the present disclosure;
FIG. 3 illustrates a flowchart of an example method for provisioning a radio access network according to one or more embodiments of the present disclosure;
FIG. 4 illustrates a flowchart of another example method for provisioning a radio access network according to one or more embodiments of the present disclosure; and
FIG. 5 illustrates an example computing system according to one or more embodiments of the present disclosure.

### DETAILED DESCRIPTION

A radio access network (RAN) may be employed to help to provide wireless communication for devices. In some circumstances, RANs may be deployed to use radio frequencies that are different than radio frequencies that are used by many other types of wireless equipment, such as 802.11 devices. Because RANs may utilize unique radio frequencies that may not interfere with other wireless equipment, RANs may facilitate the transmission of data between user equipment devices and a core network with less noise than other types of wireless networks. Consequently, RANs may be used for wireless communication in various technology fields such as those involving emergency response systems, Internet of Things (IoT), manufacturing, logistics, healthcare, personal networks, and transportation. For example, RANs may be used in railway transportation networks to provide wireless communication for train control, passenger information systems, and other applications. Types of RANs may include cloud RAN (CRAN), virtual RAN (VRAN), and/or any other RAN, such as any type of extensible RAN (xRAN). RANs may include small cell networks and distributed antenna systems (DAS).

To establish a RAN, the RAN may be provisioned. RAN provisioning may include several steps including initializing and configuring a RAN device with specified performance settings, establishing connectivity between a RAN device and a core network, testing and verifying that the RAN is functioning properly, and/or activating and commissioning the RAN to make the RAN operational for user equipment devices to connect to the RAN. Manual provisioning of a RAN may involve a user, such as a subject matter expert, spending an entire day, multiple days, or even multiple weeks to complete. Furthermore, manual RAN provisioning may be prone to human error because of the large number of RAN devices and other network elements that may be included. For example, a RAN may include two, five, ten, fifty, one hundred, a thousand, or thousands of RAN devices. As RANs are increasingly employed by non-experts and include more RAN devices, network elements, and sophisticated protocols, automated RAN provisioning may be desired.

The present disclosure may relate to, among other things, a RAN provisioning method and system that utilizes a RAN device that is automatically provisioned according to configuration data obtained in response to the RAN device automatically directing an identifier of the RAN device to a network address after the RAN is powered on. Thus, the provisioning process of the RAN may be improved by creating a method and system of automating RAN provisioning according to the present disclosure. In these and other embodiments, the RAN device may be provisioned such that a RAN is established without any further provisioning of the RAN device. In some circumstances, a RAN may include multiple RAN devices. Including multiple RAN devices may enable utilization of additional radio frequency bands, increase capacity to accommodate user equipment devices and data traffic, increase effective load balancing, increase system resiliency and redundancy, etc.

A method of automatically provisioning RAN devices according to configuration data such that the RAN is established without any further provisioning of the RAN devices may assist in ensuring that all of the RAN devices are configured properly and with minimal delay and user oversight. Further, in some embodiments, the system and method may include the RAN devices persistently remembering the network address used in an initial provision so that the RAN devices may automatically reprovision (i.e., upgrade or update) over time.

Embodiments of the present disclosure are explained with reference to the accompanying figures.

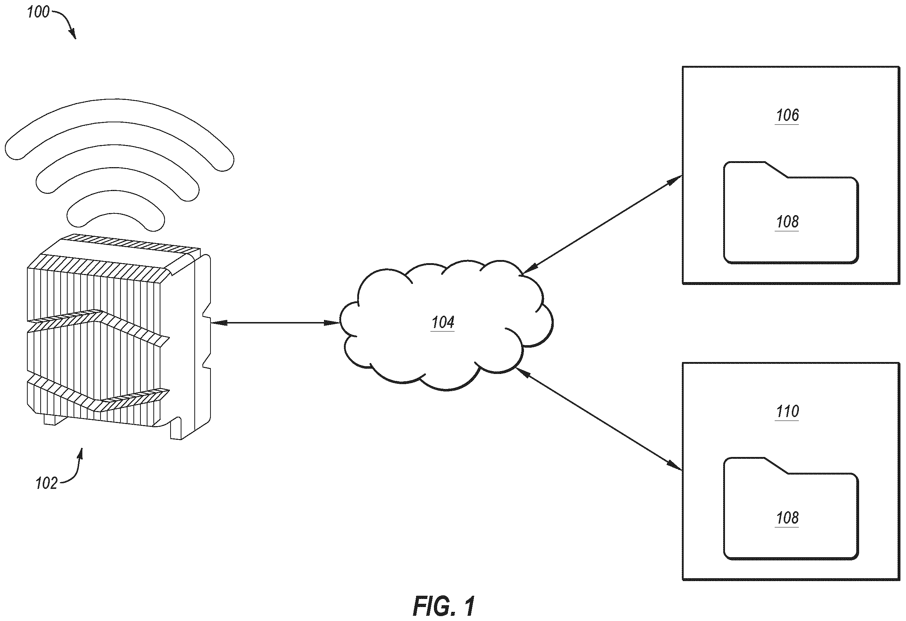

Turning to the figures, FIG. 1 illustrates an example operating environment 100 for provisioning a RAN device 102 according to one or more embodiments of the present disclosure. The environment 100 may include the RAN device 102, a network 104, a first system 106, and a second system 110.

In some embodiments, the network 104 may be configured to communicatively couple the RAN device 102 with the first system 106 and the second system 110. In some embodiments, the network 104 may be any network or configuration of networks configured to send and receive communications between systems and devices. In some embodiments, the network 104 may include a wired network, an optical network, and/or a wireless network, and may have numerous different configurations, including multiple different types of networks, network connections, and protocols to communicatively couple devices and systems in the environment 100.

In some embodiments, the first system 106 may include any configuration of hardware, such as processors, servers, and database servers that are networked together and configured to perform a task. For example, the first system 106 may include one or multiple computing systems, such as multiple servers that each include memory and at least one processor.

In some embodiments, the second system 110 may include any configuration of hardware, such as processors, servers, and database servers that are networked together and configured to perform a task. For example, the second system 110 may include one or multiple computing systems, such as multiple servers that each include memory and at least one processor.

In some embodiments, the RAN device 102 may include any of various devices in which radio broadcast operations may be carried out. For example, the RAN device 102 may be any device that includes hardware to create a RAN using radio frequency signals. For example, the RAN device 102 may include one or more antennas, transceivers, radio frequency circuitry, and other hardware/software configured to implement one or more protocols to implement a RAN. As an example, the RAN device 102 may include a base transceiver station (BTS), remote radio head (RRH), small cell, distributed antenna system (DAS), baseband unit (BBU), or components thereof.

In some embodiments, the RAN device 102 may be configured to implement a RAN. In these and other embodiments, implementing a RAN may include the RAN device 102 being configured to wirelessly interface with other devices and connect the devices to one or more other networks, such as public or private networks. In these and other embodiments, the RAN may have one or more characteristics that may vary based on the location of the RAN, type of the RAN, types, locations, and number of devices to connect to the RAN, networks to connect to the RAN, and frequencies to be used by the RAN, among other factors.

In some embodiments, the RAN device 102 may be automatically provisioned. Provisioning of the RAN device 102 may include providing parameters for one or more of the characteristics of the RAN device 102. In some embodiments, the RAN device 102 may be automatically provisioned the first time that the RAN device 102 is powered on after being provided or sold to a user. In these and other embodiments, the RAN device 102 may perform the automatic provisioning without input being obtained directly at the RAN device 102. For example, a user may power on the RAN device 102. In these and other embodiments, after being powered on, the RAN device 102 may automatically provision without further input from the user at the RAN device 102. In these and other embodiments, the RAN device 102 may be automatically provisioned such that there is no additional input by a user to provision the RAN device 102 to implement a RAN. In short, the automatic provisioning may be sufficient without further input to allow the RAN device 102 to implement a RAN.

Alternately or additionally, besides the RAN device 102 being automatically provisioned after powering on for the first time, the RAN device 102 may be automatically provisioned in response to updates being implemented for the RAN device 102. For example, after being moved to other locations, or in response to input from a user, the RAN device 102 may be automatically provisioned. As another example, the RAN device 102 may automatically provision in response to a user requesting an automatic provisioning of the RAN device 102.

In some embodiments, to automatically provision the RAN device 102, the RAN device 102 may obtain an identifier. For example, the identifier may be a serial number from the manufacturer and/or a certificate from the manufacturer verifying the owner of the RAN device 102. In some embodiments, the identifier of the RAN device 102 may be registered with the manufacturer of the RAN device 102, the host of the first system 106, and/or the host of the second system 110 at the time the RAN device 102 is ordered, manufactured, delivered, and/or at any other time before the RAN device 102 directs the identifier to the first network address.

In some embodiments, to automatically provision the RAN device 102, the RAN device 102 may access a first network address stored on the RAN device 102. In some embodiments, the first network address may be an internet protocol (IP) network address of the first system 106. For example, the first network address may be any internet protocol version 4 (IPv4) address or internet protocol version 6 (IPv6) address. The first network address may be a public IP address or a private IP address. In these and other embodiments, the first network address may be stored in memory of the RAN device 102 and accessed when the RAN device 102 first powers on.

In some embodiments, to automatically provision the RAN device 102, the RAN device 102 may connect to the network 104. For example, in response to powering on, the RAN device 102 may scan for available networks, such as wired, optical, or wireless networks. After identifying a network, the RAN device 102 may connect to the network 104. In these and other embodiments, the network 104 may be coupled to the Internet and may be configured to provide the RAN device 102 access to the Internet.

In some embodiments, the RAN device 102 may direct the identifier to the first network address of the first system 106 over the network 104. In some embodiments, directing the identifier may include transmitting one or more IP packets from the RAN device 102 to the first network address that includes the identifier of the RAN device 102 as data in the IP packet. In some embodiments, the RAN device 102 may direct the identifier to the first network address by sending a request to an application programming interface (API) at the first network address. Alternately or additionally, the RAN device 102 may be configured to provide one or more security identifiers to the first network address of the first system 106 over the network 104.

In some embodiments, the first system 106 may obtain the identifier of the RAN device 102. For example, the first system 106 may obtain the identifier at the first network address of the first system 106. In some embodiments, the first system 106 may authenticate the identity of the RAN device 102 based on the identifier of the RAN device 102 obtained. In some embodiments, the first system 106 may select configuration data 108 based on the identifier of the RAN device 102 obtained. For example, the RAN device 102 may provide a security certificate to the first system 106. The first system 106 may match the security certificate and identifier of the RAN device 102 to verify the identity of the RAN device 102. As another example, the first system 106 may use the identifier to issue a security challenge to the RAN device 102. In these and other embodiments, the RAN device 102 and the first system 106 may exchange information to complete the security challenge.

In some embodiments, the first system 106 may include multiple different sets of configuration data 108 for RAN devices. A single set of configuration data 108 may be used by a RAN device 102 to provision a RAN device 102 to implement a RAN. In these and other embodiments, the sets of configuration data may include different parameters for implementation of different RANs. In these and other embodiments, a set of configuration data may be associated with the identifier of the RAN device 102. In these and other embodiments, the first system 106 may use the identifier of the RAN device 102 to select a set of configuration data for the RAN device. The selected set of configuration data may be referred to as the configuration data 108. The first system 106 may provide the configuration data 108 to the RAN device 102.

In some embodiments, the RAN device 102 may obtain the configuration data 108 for provisioning the RAN device 102 from the first system 106. In some embodiments, the configuration data 108 may include information for one or more settings of the RAN device 102. For example, the configuration data 108 may include information about the following settings of the RAN device 102: antenna gain, cell index, physical cell identification, tracking area code, time division duplex subframe assignment, time division duplex special subframe pattern, internet protocol subnet, internet protocol gateway, internet protocol domain name system address, public land mobile network, internet protocol address of mobility management entity, spectrum access system authentication credentials, spectrum access system network address, any other RAN device 102 setting, and/or any combination thereof, among other settings.

In some embodiments, after obtaining the configuration data, the RAN device 102 may be provisioned according to the configuration data 108. Provisioning the RAN device 102 may include configuring one or more settings of the RAN device 102 according to the configuration data 108. The settings of the RAN device 102 may affect the configuration of the RAN implemented by the RAN device 102. In some embodiments, provisioning the RAN device 102 may further include performing one or more other operations including configuring security protocols, downloading and installing software and/or firmware, establishing connectivity between the RAN device 102 and a core network, and/or any other actions that may be specified in the configuration data 108 to onboard the RAN device 102 and thus establish a RAN implemented by the RAN device 102. For example, configuring security protocols may include setting up firewalls, encryption, and access controls to protect against unauthorized access, data breaches, and/or other security threats. In some embodiments, provisioning the RAN device 102 according to the configuration data 108 may further include activating the RAN device 102 within the RAN by registering the RAN device 102 with a spectrum access system (SAS).

In some embodiments, after provisioning of the RAN device 102, further provisioning of the RAN device 102 may occur in the future. For example, a user of the RAN device 102 may determine to adjust one or more settings of the RAN device 102. In these and other embodiments, the first system 106 may send a re-provision request to the RAN device 102. In response to the re-provision request, the RAN device 102 may send the identifier to the first system 106 to obtain second configuration data to re-provision the RAN device 102.

In some embodiments, the first system 106 may not include the configuration data 108. For example, the configuration data 108 may be hosted by another system, such as the second system 110. In these and other embodiments, the first system 106 may be configured to authenticate or verify the identity of the RAN device 102 using the identifier of the RAN device 102 and/or other information from the RAN device 102. In these and other embodiments, after verifying the identity of the RAN device 102, the first system 106 may provide a second network address of the second system 110 to the RAN device 102. The RAN device 102 may obtain the second network address from the first system 106.

In some embodiments, in response to obtaining the second network address from the first system 106, the RAN device 102 may direct the identifier of the RAN device 102 to the second network address of the second system 110. The second system 110 may obtain the identifier of the RAN device 102. In some embodiments, the second system 110 may select a set of configuration data from multiple sets of configuration data for the RAN device 102 using the identifier. The second system 110 may provide the selected set of configuration data to the RAN device 102. The RAN device 102 may provision the RAN device 102 using the selected set of configuration data from the second system 110. In some embodiments, the second system 110 may authenticate the RAN device 102 similar to how the first system 106 authenticated the RAN device 102.

In some embodiments, the second system 110 may be a user-hosted system that is independent of the first system 106. For example, the second system 110 may be established and accessed using a private network to help with user confidentiality and security.

Modifications, additions, or omissions may be made to the environment 100 without departing from the scope of the disclosure. For example, the designations of different elements in the manner described is meant to help explain concepts described herein and is not limiting. For instance, in some embodiments, the RAN device 102 and the first system 106 are delineated in the specific manner described to help with explaining concepts described herein, but such delineation is not meant to be limiting. Further, the environment 100 may include any number of other elements or may be implemented within other systems or contexts than those described.

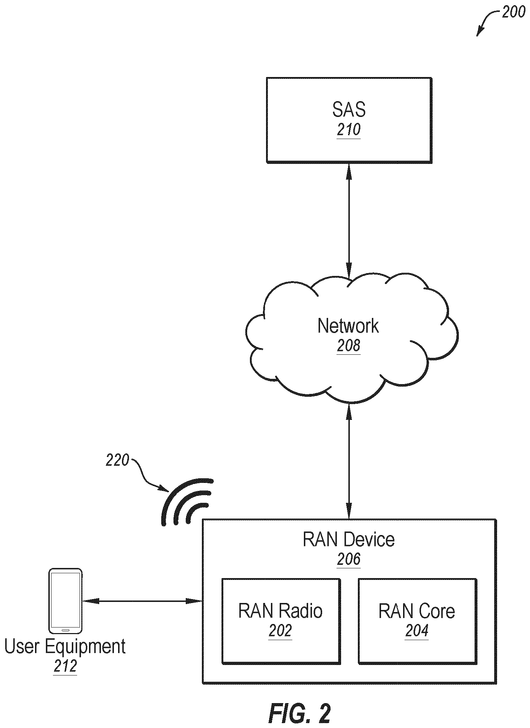

FIG. 2 illustrates an example environment 200 for a RAN 220 according to one or more embodiments of the present disclosure. The environment 200 includes a RAN device 206 that is configured to implement the RAN 220, a network 208, a SAS 210, and user equipment 212. Generally, the environment 200 illustrates an example operation of the RAN 220 and some elements that may be used during operation of the RAN 220. In general, the RAN 220 may be configured to facilitate communication within a wireless network infrastructure. For example, the RAN 220 may be configured to provide for wireless communication for the user equipment 212. In these and other embodiments, the RAN 220 may provide user equipment 212 access to the network 208.

In some embodiments, the network 208 may be similar to the network 104 of FIG. 1 and may be any private or public network and may include the Internet. In these and other embodiments, the user equipment 212 may be any electronic device that is configured for wireless communication. For example, the user equipment 212 may be a mobile phone, smart phone, laptop computer, desktop computer, vehicle, and/or any other device configured to communicate with the RAN 220.

The RAN 220 may be implemented by the RAN device 206. The RAN device 206 may perform operations for the RAN 220. For example, the RAN device 206 may allocate radio resources, employ radio frequency processing techniques, implement control plane (CP) and/or user plane (UP) functions, interface with a core network, and/or perform any other function of a wireless network.

In some embodiments, the RAN device 206 may include a RAN radio 202 and a RAN core 204. The RAN radio 202 may be one or more physical devices configured to transmit and/or receive radio signals. For example, the RAN radio 202 may include a remote radio head (RRH) (also referred to as a remote radio unit (RRU)), a radio gateway unit (RGU), antennas, and/or a wireless transceiver. The RAN radio 202 may have an interface such as a Common Public Radio Interface (CPRI), an enhanced Common Public Radio Interface (eCPRI), a Next-Generation Fronthaul Interface (NGFI), and/or any other communication interface used in wireless networks. In these and other embodiments, the RAN radio 202 may be a radio device configured for use in a microcell; a small cell such as a microcell, picocell, and/or a femtocell; a massive multiple input, multiple output (MIMO) system; and/or any other type of cell. In some embodiments, the RAN radio 202 may be a Citizens Broadband Radio Spectrum (CBRS) device (CBSD) or a CBRS-capable device (for example, any device that operates within the 3550 MHz-3700 MHz spectrum band).

In some embodiments, the RAN core 204 may include a central unit (CU), a distributed unit (DU), and/or a BBU that may include both the CU and the DU functionalities. In some embodiments, the RAN core 204 may include software such as software allowing for the virtualization of network functions (i.e., network functions virtualization (NFV)). In some embodiments, the RAN core 204 may oversee the CP and/or the UP operating within the RAN 220. For example, the RAN core 204 may be responsible for baseband processing such as modulating signals and encoding data, establishing connectivity between the user equipment 212 and the RAN 220, radio resource management (RRM), and/or for carrying signaling traffic that contains other configuration and implementation commands for the RAN 220. In some embodiments, the RAN core 204 may be located at or near the location of the RAN radio 202. In some embodiments, the RAN core 204 may be virtualized, such as through NFV (e.g., RAN core 204 functions may be implemented as software and run on cloud infrastructure).

In some embodiments, the RAN core 204 may exist independently of a specific RAN device 206, such as when the RAN core 204 has been virtualized. In some embodiments, the RAN device 206 may be configured for deployment in an outdoor environment and/or in an indoor environment. For example, the RAN device 206 may be implemented outside on a rooftop or inside of a building.

In some embodiments, the RAN device 206 may connect to the network 208 via a wireless network, such as an 802.11 network, a mobile broadband network, an optical network, or a wired network. In some embodiments, the RAN device 206 may connect to the network 208 to, exchange data between user equipment devices and the Internet, update firmware, receive provisioning-related data, and/or communicate with a SAS such as to obtain spectrum allocation (e.g., via registering the RAN device with a SAS administrator).

In some embodiments, the RAN device 206 may use the network 208 to send a request to a SAS 210. In some embodiments, the RAN device 206 sending a request to the SAS 210 may be part of registering the RAN device 206 to operate at a certain radio frequency as allocated by the SAS 210. In some embodiments, the SAS 210 may be a system for managing shared spectrum access. For example, the SAS 210 may be a system that determines what frequencies may be used by a RAN 220 for operation. As an example, the SAS 210 may be the Citizens Broadband Radio Service (CBRS) SAS. In these and other embodiments, the RAN device 206 may send a request to the SAS 210 after provisioning. Sending a request to the SAS 210 may include directing information from the RAN device 206 including information about physical parameters of the RAN device 206 such as longitude, latitude, RRH height, etc.; radio frequency parameters of the RAN device 206 such as bandwidth, signal-to-noise ratio (SNR), propagation delay, effective isotropic radiated power, etc.; and/or any other information related to the RAN device 206. The SAS 210 may use the information from the RAN device 206 as well as requests from other RAN devices to determine frequencies that may be used by the RAN device 206 for the RAN 220. The SAS 210 may allocate the frequencies to the RAN device 206 for operation. In these and other embodiments, the RAN device 206 may not operate on the allocated frequencies forever. Rather, the RAN device 206 may continue to communicate with the SAS 210 to determine the continuing availability of the frequencies and/or if other frequencies are available for transmission.

In response to registering with the SAS 210, the RAN 220 may be established as a wireless network such that user equipment 212 may communicate using the RAN 220. In some embodiments, the RAN 220 may allow user equipment 212 to communicate with the RAN device 206, the network 208, and/or other user equipment 212.

Modifications, additions, or omissions may be made to the environment 200 without departing from the scope of the disclosure. For example, the designations of different elements in the manner described is meant to help explain concepts described herein and is not limiting. For instance, in some embodiments, the RAN radio 202 and the RAN device 206 are delineated in the specific manner described to help with explaining concepts described herein but such delineation is not meant to be limiting. Further, the RAN 220 may include any number of other elements or may be implemented within other systems or contexts than those described.

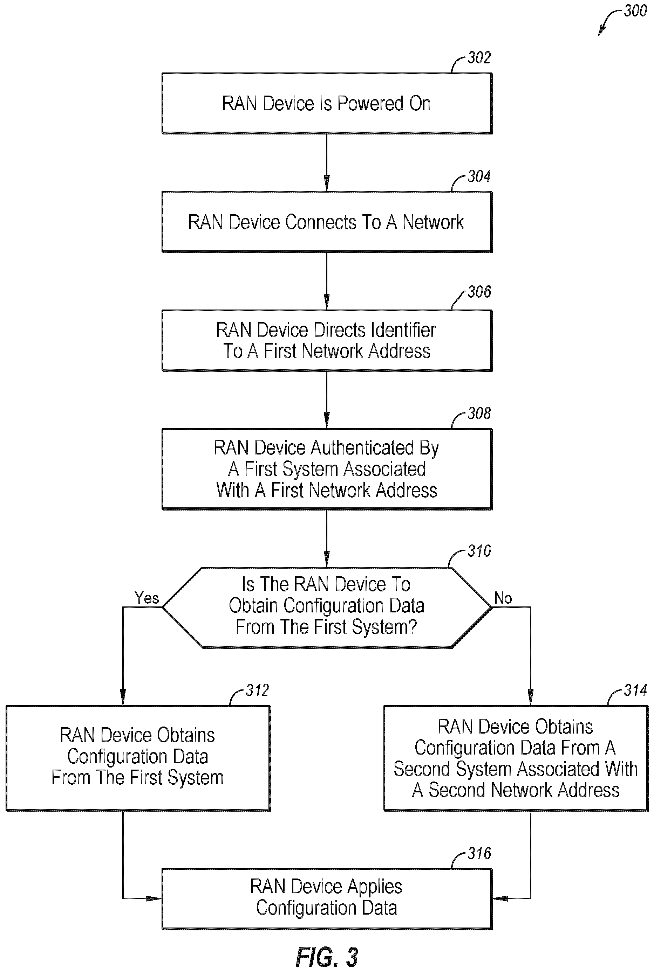

FIG. 3 illustrates a flowchart of an example method for provisioning a RAN according to one or more embodiments of the present disclosure. The method 300 may be performed by any suitable system, apparatus, or device. For example, the RAN device 102 of FIG. 1 and/or the RAN device 206 of FIG. 2 may perform one or more of the operations associated with the method 300. Although illustrated with discrete blocks, the steps and operations associated with one or more of the blocks of the method 300 may be divided into additional blocks, combined into fewer blocks, or eliminated, depending on the particular implementation. In some embodiments, one or more non-transitory computer readable mediums may be configured to store instructions that when executed result in performing the method 300.

The method 300 may begin at block 302, where a RAN device may be powered on. In some embodiments, the RAN device may include one or more RAN radios and/or one or more RAN cores. Powering on the RAN device may include enabling a radio interface for a defined period of time. In these and other embodiments, the radio interface may include transceiver circuitry for transmission and reception of radio signals and may allow for selection of frequency, channel bandwidth, and/or modulation schemes. In some embodiments, powering on may include the RAN device transitioning from an off state to a powered state, such as a low-power or high-power state. In some embodiments, the RAN device may power on in response to the RAN device being supplied electrical power such as by being plugged in by a user. In some embodiments, the powering on may include the RAN device being powered on for the first time after the RAN device is provided or sold to a user. After the RAN device is powered on, the method 300 may continue at block 304.

At block 304, the RAN device may connect to a network. In some embodiments, the network may be a wireless network, such as an 802.11 network, an optical network, or a wired network. In some embodiments, the network may be configured to provide the RAN device access to the Internet. In some embodiments, the RAN device may connect to the Internet to communicate with a core network, exchange data between user equipment (UE) devices and the Internet, update firmware, receive provisioning-related data, and/or communicate with a SAS such as to obtain spectrum allocation.

At block 306, the RAN device may direct an identifier to a first network address. In some embodiments, the identifier may include a device identifier such as a serial number of the device assigned by the manufacturer of the device. Alternately or additionally, the RAN device may direct other information to the network address. For example, the other information may include a security certificate, an IP address, network access credentials such as a username, password, and/or other access tokens, a public-private key pair, timestamp information, geolocation information, and/or any combinations thereof. The other information may be used to verify the identity of the RAN device.

At block 308, the RAN device may be authenticated by a first system associated with the first network address. In some embodiments, authenticated may include that the first system has verified the identity of the RAN device. For example, the first system may contain a database/registry of serial numbers and/or security certificates associated with RAN devices manufactured for a user such that the first system may determine that a RAN device directing an identifier is a RAN device owned by the user.

At block 310, it may be determined if the RAN device is to obtain configuration data from the first system. In some embodiments, the first system associated with the first network address may provide the RAN device with configuration data based on user selection. For example, a user may not have a user-hosted system (e.g., a system associated with a second network address) to utilize. Therefore, the user may choose to have the RAN device obtain configuration data from the system associated with the first network address for convenience. Alternately or additionally, the system associated with the first network address may not be configured to send configuration data to every type of RAN device, and thus, in some embodiments, a system associated with a second network address may be utilized.

In response to the RAN device obtaining the configuration data from the first system, the method 300 may proceed to block 312. In response to the RAN device not obtaining the configuration data from the first system, the method 300 may proceed to block 314.

At block 312, the RAN device may obtain configuration data from the first system associated with the first network address. In some embodiments, the configuration data may be a set of configuration data selected from among several configuration data sets based on the identifier of the RAN device. In some embodiments, the configuration data may include information for one or more settings of the RAN device. For example, the configuration data may include information on antenna gain, cell index, physical cell identification, tracking area code, time division duplex subframe assignment, time division duplex special subframe pattern, internet protocol subnet, internet protocol gateway, internet protocol domain name system address, public land mobile network, internet protocol address of mobility management entity, spectrum access system authentication credentials, and/or spectrum access system network address. In some embodiments, the information included in the configuration data may be selected by a user.

At block 314, the RAN device may obtain configuration data from a second system associated with a second network address. In some embodiments, the second system associated with a second network address may be a user-hosted server. In some embodiments, in response to directing the identifier, the RAN device may obtain a second network address associated with configuration data. In response to obtaining the second network address, the RAN device may send a request to the second network address for the configuration data. In response to the request to the second network address, the RAN device may obtain the configuration data from the second system associated with the second network address. In these and other embodiments, the RAN device obtaining the second network address may result in the RAN device persistently remembering the second network address so that the RAN device may automatically communicate with the second system over time to obtain new and/or updated configuration data (i.e., the RAN device may direct an identifier directly to the second system instead of having to be reverified by the first system). In some embodiments, the RAN device may no longer direct an identifier to the first system unless the RAN device is reset to default settings.

At block 316, the method 300 may include the RAN device applying the configuration data obtained from either the first system or the second system. In some embodiments, applying the configuration data may include configuring network settings, authentication settings, quality of service (QoS) settings, firmware and/or software, radio resource management (RRM) settings, security settings, power-related settings, and/or any other specified setting of the RAN device according to the configuration data.

Modifications, additions, or omissions may be made to the method 300 without departing from the scope of the disclosure. For example, the designations of different elements in the manner described is meant to help explain concepts described herein and is not limiting. Further, the method 300 may include any number of other elements or may be implemented within other systems or contexts than those described.

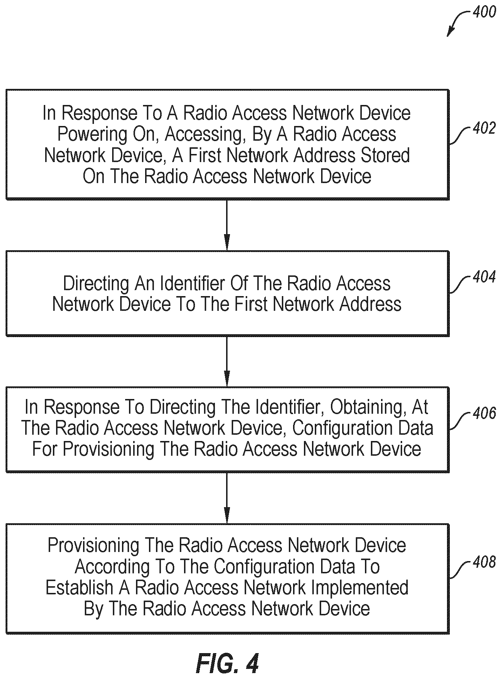

FIG. 4 illustrates a flowchart of an example method 400 for provisioning a RAN according to one or more embodiments of the present disclosure.

The method 400 may be performed by any suitable system, apparatus, or device. For example, the RAN device 102, the first system 106, and/or the second system 110 may perform one or more of the operations associated with the method 400. Although illustrated with discrete blocks, the steps and operations associated with one or more of the blocks of the method 400 may be divided into additional blocks, combined into fewer blocks, or eliminated, depending on the particular implementation.

The method 400 may begin at block 402, where, in response to a RAN device powering on, accessing, by the RAN device, a first network address stored on the RAN device may occur.

At block 404, the method 400 may include directing an identifier of the RAN device to the first network address.

At block 406, the method 400 may include in response to directing the identifier, obtaining, at the RAN device, configuration data for provisioning the RAN device. In some embodiments, the configuration data may be a set of configuration data selected from among configuration data sets and provided to the RAN device based on the identifier of the RAN device. In some embodiments, the RAN device may obtain the configuration data from a system associated with the first network address. In these and other embodiments, the method 400 may further comprise directing a security certificate associated with the RAN device to the first network address, wherein the RAN device obtains the configuration data in response to validation of the security certificate with respect to the identifier by the system. In some embodiments, the configuration data may include information for one or more of the following settings of the RAN device: antenna gain, cell index, physical cell identification, tracking area code, time division duplex subframe assignment, time division duplex special subframe pattern, IP subnet, IP gateway, IP domain name system address, public land mobile network, IP address of mobility management entity, SAS credentials, SAS network address.

At block 408, the method 400 may include provisioning the RAN device according to the configuration data to establish a RAN implemented by the RAN device. In some embodiments, the RAN device may be provisioned according to the configuration data such that the RAN is established without any further provisioning of the RAN device.

Modifications, additions, or omissions may be made to the method 400 without departing from the scope of the disclosure. For example, the designations of different elements in the manner described is meant to help explain concepts described herein and is not limiting. Further, the method 400 may include any number of other elements or may be implemented within other systems or contexts than those described.

For example, the method 400 may further include, in response to directing the identifier, obtaining a second network address associated with the configuration data. The method 400 may further include sending a request for the configuration data to the second network address, wherein the RAN device obtains the configuration data from a system associated with the second network address.

As another example, the method 400 may further include after obtaining the second network address and in response to a trigger to reobtain the configuration data, accessing, by the RAN device, the second network address; directing the identifier of the RAN device to the second network address; and in response to directing the identifier, obtaining, at the RAN device, the configuration data for provisioning the RAN device from the system.

Furthermore, the method 400 may include after provisioning, sending a request to a SAS to obtain one or more frequencies for wireless transmissions in the RAN. Alternately or additionally, the method 400 may include after using the one or more frequencies, sending a request to determine if the one or more frequencies are still available for use by the RAN.

Additionally, the method 400 may include after provisioning, the RAN device providing a user with a walled garden interface. The walled garden interface may include a closed or restricted environment in which the user's ability to access external and/or third-party content and functionalities is limited. For example, the walled garden interface may limit applications and/or content that may be accessed and/or downloaded using the RAN device.

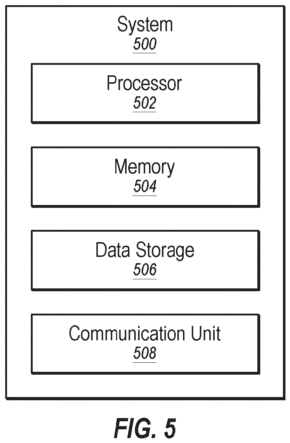

FIG. 5 is an example computing system 500 according to one or more embodiments of the present disclosure. The computing system 500 may include a processor 502, a memory 504, a data storage 506, and/or a communication unit 508, which all may be communicatively coupled. For example, the RAN device 102, the first system 106, and/or the second system 110 in environment 100 of FIG. 1 may be implemented as or configured to utilize a computing system consistent with the computing system 500.

Generally, the processor 502 may include any suitable special-purpose or general-purpose computer, computing entity, or processing device including various computer hardware or software modules and may be configured to execute instructions stored on any applicable computer-readable storage media. For example, the processor 502 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 5, it is understood that the processor 502 may include any number of processors distributed across any number of network or physical locations that are configured to perform individually or collectively any number of operations described in the present disclosure. In some embodiments, the processor 502 may interpret and/or execute program instructions and/or process data stored in the memory 504, the data storage 506, or the memory 504 and the data storage 506. In some embodiments, the processor 502 may fetch program instructions from the data storage 506 and load the program instructions into the memory 504.

After the program instructions are loaded into the memory 504, the processor 502 may execute the program instructions, such as instructions to cause the computing system 500 to perform some of the operations of the method 300 of FIG. 3 and/or the method 400 of FIG. 4. For example, the computing system 500 may execute the program instructions to obtain configuration data from a first system or to obtain configuration data from a second system of the method 300 of FIG. 3.

The memory 504 and the data storage 506 may include computer-readable storage media or one or more computer-readable storage mediums for having computer-executable instructions or data structures stored thereon. Such computer-readable storage media may be any available media that may be accessed by a general-purpose or special-purpose computer, such as the processor 502. In some embodiments, the computing system 500 may or may not include either of the memory 504 and the data storage 506.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 502 to perform a particular operation or group of operations.

The communication unit 508 may include any component, device, system, or combination thereof that is configured to transmit or receive information over a network. In some embodiments, the communication unit 508 may communicate with other devices at other locations, the same location, or even other components within the same system. For example, the communication unit 508 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 508 may permit data to be exchanged with a network and/or any other devices or systems described in the present disclosure. For example, the communication unit 508 may allow the computing system 500 to communicate with other systems, such as computing devices and/or other networks.

One skilled in the art, after reviewing this disclosure, may recognize that modifications, additions, or omissions may be made to the computing system 500 without departing from the scope of the present disclosure. For example, the computing system 500 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

The description extends to the following set of numbered statements:
S 1. A system comprising:
   a radio access network device configured to:
   in response to powering on, access a first network address stored on the radio access network device;
   direct an identifier of the radio access network device to the first network address;
   in response directing the identifier, obtain configuration data for provisioning the radio access network device; and
   provision the radio access network device according to the configuration data to establish a radio access network implemented by the radio access network device.
S2. The system of statement S 1, wherein the radio access network device is configured to be provisioned according to the configuration data such that the radio access network is established without any further provisioning of the radio access network device.
S3. The system of statement S 1 or S2, wherein the configuration data is a set of configuration data selected from among a plurality of configuration data sets and provided to the radio access network device based on the identifier of the radio access network device.
S4. The system of any of the preceding statements, wherein the radio access network device is configured to obtain the configuration data from a system associated with the first network address.
S5. The system of statement S4, wherein the radio access network device is further configured to direct a security certificate associated with the radio access network device to the first network address, wherein the radio access network device obtains the configuration data in response to validation of the security certificate with respect to the identifier by the system.
S6. The system of any of the preceding statements, wherein the radio access network device is further configured to:
   in response to directing the identifier, obtain a second network address associated with the configuration data; and
   send a request for the configuration data to the second network address, wherein the radio access network device obtains the configuration data from a system associated with the second network address.
S7. The system of statement S6, wherein the radio access network device is further configured to:
   after obtaining the second network address and in response to a trigger to reobtain the configuration data, access, by the radio access network device, the second network address;
   direct the identifier of the radio access network device to the second network address; and
   in response to directing the identifier, obtain, at the radio access network device, the configuration data for provisioning the radio access network device from the system.
S8. The system of any of the preceding statements, wherein the radio access network device is further configured to:
   after provisioning, provide a user with a walled garden interface.
S9. The system of any of the preceding statements, wherein the configuration data includes information for one or more of the following settings of the radio access network device: antenna gain, cell index, physical cell identification, tracking area code, time division duplex subframe assignment, time division duplex special subframe pattern, internet protocol subnet, internet protocol gateway, internet protocol domain name system address, public land mobile network, internet protocol address of mobility management entity, spectrum access system authentication credentials, spectrum access system network address.
S 10. The system of any of the preceding statements, wherein the first network address is an internet protocol network address, and the identifier is directed over Internet to the first network address.

## Claims

1. A method comprising:
in response to a radio access network device powering on, accessing, by the radio access network device, a first network address stored on the radio access network device;
directing an identifier of the radio access network device to the first network address;
in response to directing the identifier, obtaining, at the radio access network device, configuration data for provisioning the radio access network device; and
provisioning the radio access network device according to the configuration data to establish a radio access network implemented by the radio access network device.

2. The method of claim 1, wherein the radio access network device is provisioned according to the configuration data such that the radio access network is established without any further provisioning of the radio access network device.

3. The method of claim 1 or 2, wherein the configuration data is a set of configuration data selected from among a plurality of configuration data sets and provided to the radio access network device based on the identifier of the radio access network device.

4. The method of any of the preceding claims, wherein the radio access network device obtains the configuration data from a system associated with the first network address.

5. The method of claim 4, further comprising directing a security certificate associated with the radio access network device to the first network address, wherein the radio access network device obtains the configuration data in response to validation of the security certificate with respect to the identifier by the system.

6. The method of any of the preceding claims, further comprising:
in response to directing the identifier, obtaining a second network address associated with the configuration data; and
sending a request for the configuration data to the second network address, wherein the radio access network device obtains the configuration data from a system associated with the second network address.

7. The method of claim 6, further comprising:
after obtaining the second network address and in response to a trigger to reobtain the configuration data, accessing, by the radio access network device, the second network address;
directing the identifier of the radio access network device to the second network address; and
in response to directing the identifier, obtaining, at the radio access network device, the configuration data for provisioning the radio access network device from the system.

8. The method of any of the preceding claims, further comprising:
after provisioning, sending a request to a spectrum access system to obtain one or more frequencies for wireless transmissions in the radio access network; and
after using the one or more frequencies, sending a request to determine if the one or more frequencies are still available for use by the radio access network.

9. The method of any of the preceding claims, wherein the configuration data includes information for one or more of the following settings of the radio access network device: antenna gain, cell index, physical cell identification, tracking area code, time division duplex subframe assignment, time division duplex special subframe pattern, internet protocol subnet, internet protocol gateway, internet protocol domain name system address, public land mobile network, internet protocol address of mobility management entity, spectrum access system authentication credentials, spectrum access system network address.

10. The method of any of the preceding claims, wherein the radio access network device is further configured to:
after provisioning, provide a user with a walled garden interface.

11. The method of any of the preceding claims, wherein the first network address is an internet protocol network address, and the identifier is directed over Internet to the first network address.

12. One or more computer programs comprising instructions which, when executed by a computer, cause the computer to carry out the method of any of the preceding claims.

13. One or more non-transitory computer readable mediums configured to store instructions that when executed result in performing the method of any of claims 1 to 11.

14. A system comprising:
a radio access network device configured to:
in response to powering on, access a first network address stored on the radio access network device;
direct an identifier of the radio access network device to the first network address;
in response directing the identifier, obtain configuration data for provisioning the radio access network device; and
provision the radio access network device according to the configuration data to establish a radio access network implemented by the radio access network device.

15. The system of claim 14, wherein the radio access network device is further configured to carry out the method of any of claims 2 to 11.
